# EUROPÄISCHE PATENTANMELDUNG

(11) **EP 3 916 555 A1**
(43) Veröffentlichungstag der Anmeldung: **01.12.2021**
(21) Anmeldenummer: 20176760.5
(22) Anmeldetag: 27.05.2020
(51) Int. Cl.: G06F 9/54, G05B 13/04, G06F 9/50

(54) **VERFAHREN UND VORRICHTUNGEN ZUR LATENZKOMPENSATION**

(71) Anmelder: Gestalt Robotics GmbH, 10997 Berlin (DE)
(72) Erfinder: Lambrecht, Jens, 10997 Berlin (DE)
(74) Vertreter: v. Bezold & Partner Patentanwälte - PartG mbB

(57) **Zusammenfassung**

Die Erfindung betrifft u.a. ein Verfahren zum Betreiben einer Clientvorrichtung (12). Wenn innerhalb einer vorbestimmten Zeitdauer kein erster Betriebsbefehl von einer Servervorrichtung (14) in Reaktion auf ein Senden mindestens eines ersten Sensorsignals empfangen wird, wird eine von mehreren Vorhersagen in Abhängigkeit von mindestens einem ersten Sensorsignal und/oder mindestens einem aktuell erfassten Sensorsignal und mehreren Sensorsignalhypothesen ausgewählt und die Clientvorrichtung (12) mit mindestens einer Betriebsbefehlhypothese der ausgewählten Vorhersage betrieben. Die Erfindung betrifft u.a. auch ein Verfahren zum Betreiben einer Servervorrichtung (14).

## Beschreibung

### Technisches Gebiet

Die vorliegende Offenbarung betrifft ein Verfahren zum Betreiben einer Clientvorrichtung zur Latenzkompensation, ein Verfahren zum Betreiben einer Servervorrichtung zur Latenzkompensation und eine Vorrichtung, vorzugsweise eine Clientvorrichtung oder einer Servervorrichtung.

### Hintergrund

Cloud- und Edge-Computing ermöglichen die flexible Nutzung externer Rechenleistung und dies skalierbar und serviceorientiert. Dies ist zunehmend auch für die computerbasierte Steuerung von mobilen oder stationären Maschinen oder Anzeigegeräten interessant, da diese sonst den Restriktionen der lokal verbauten Rechnerinfrastruktur (On-Premises- bzw. Lokal-Berechnungen i.d.R. über Industrie-PC oder Embedded-Hardware) unterliegen.

Die Nutzung externer Rechenressourcen durch Auslagerung von Softwarefunktionen können verschiedene Vorteile durch die theoretisch unendliche Rechenleistung bringen. Beispielsweise ist es möglich, leistungsstarke und aufwändige KI-Algorithmen zu berechnen sowie verschiedene Funktionen parallel zur gleichen Zeit zu berechnen. Eine höhere Verfügbarkeit mobiler Geräte oder Maschinen, bspw. mobile Transportsysteme (AGVs), AR/VR-Brillen, kann durch Auslagerung von Rechenleistung erreicht werden. Es bestehen geringere Anforderungen an die lokale Hardware der Maschinen. Entlang des Lebenszyklus der Geräte/Software lassen sich ebenfalls verschiedene Vorteile realisieren, wie z. B. einfachere Inbetriebnahme, Updates On-The-Fly, nahtlose Integration von M2M-Kommunikation und Mehrwert-Services, einfaches Teilen von Wissen und Informationen, Transparenz und Ermöglichung neuer Geschäftsmodelle (bspw. Pay per Use) durch Monitoring-Services, nahtloses Wechseln zwischen Simulation und realen Geräten in der Softwareentwicklung usw.

Die Auslagerung von Algorithmen zur Steuerung von Maschinen ist intensiver Gegenstand der Forschung (bspw. im Bereich der Cloud-Robotik) und ist speziell im Bereich intelligenter adaptiver Systeme wie Roboter und autonomes Fahren von hoher Relevanz. Grundvoraussetzung für eine Auslagerung von Softwarediensten bzw. die Nutzung externer Softwaredienste ist insbesondere im industriellen Bereich jedoch die robuste und zuverlässige Kommunikation zwischen Maschine und externen (virtualisierten) Ressourcen. Demnach steigen die Herausforderungen an die Kommunikationstechnik, speziell bei Softwarefunktionen, die weiche oder harte Echtzeitanforderungen aufweisen (bspw. Regelung zur Anpassung von Bewegungen). Problematisch ist, dass im Gegensatz zu Industrie-Bus-Systemen die Verbindung zur Edge-/Cloud zumeist in der Regel über TCP/IP-basierte Verbindungen realisiert werden. Diese TCP/IP-basierte Verbindungen unterstützen die Echtzeitfähigkeit und deterministisches Verhalten nicht. So können Latenzen auf Grund von Staus/Überlastung und Anpassung der Datenrouten (Flow-Control) variieren. Derart ist es bspw. möglich, dass Antwortzeiten zur Cloud im Mittel den Anforderungen eines Echtzeit-kritischen Software-Service entsprechen, jedoch in der Praxis sich unvorhersehbare Varianzen einzelner Latenzen ergeben. Diese Latenzen können entweder die Performance der Anforderung negativ beeinflussen oder im Zweifelsfall zu einem kompletten Versagen der Anwendung führen. Diese Effekte finden sich intensiviert bei der Nutzung von mobilen Netzwerken, im Speziellen WLAN, für das bspw. keine Dienstgüte (Quality of Service) besteht. Moderne Mobilfunknetze wie 4G- und 5G-Campusnetzwerke versprechen Abhilfe durch die Nutzung zusätzlicher Frequenzbänder, Netzwerkvirtualisierung, angepasster Protokolle und Redundanzen. Dies kann zu einer Verringerung der Latenzen und einer Dienstgüte (Quality of Service) führen. In der Praxis sind diese neuen Funknetzwerke jedoch auch lokal anfällig für Interferenzen und elektromagnetische Felder, die bspw. von Maschinen ausgehen können, sodass speziell in Industrieumgebungen Latenzen lokal (stark) variieren können. Beispielsweise können Pakete verloren gehen oder zu spät ankommen. Besonders relevant ist diese Tatsache bei mobilen Geräten (mobile Roboter, Transportsysteme, AR-VR-Datenbrillen) und verhindert somit bisher die Auslagerung Echtzeit-relevanter Softwarefunktionen.

Die WO 2019/052665 A1 offenbart eine Technik zur Bereitstellung einer zuverlässigen Steuerung eines Roboters in einem Cloud-Robotersystem. Wenn erkannt wurde, dass ein Befehl zum Steuern des Roboters aufgrund einer Verzögerung oder eines Verlusts des Befehls in einem Kommunikationspfad zwischen dem Roboter und einer Robotersteuerung fehlt, wird ein Substitutionsbefehl erzeugt, der einem erwarteten Befehl des fehlenden Befehls entspricht. Der Substitutionsbefehl wird an den Roboter gesendet.

Die EP 2 214 067 A1 offenbart ein Netzwerk-Steuersystem, das Maßnahmen zur Latenzkompensation nutzt.

Der Erfindung liegt die Aufgabe zu Grunde, eine alternative und/oder verbesserte Technik zur Latenzkompensation zu schaffen, vorzugsweise bei einer Steuerung einer Clientvorrichtung mittels einer Servervorrichtung.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zum Betreiben einer (z. B. mobilen oder stationären) Clientvorrichtung, vorzugsweise eines Roboters, eines Fahrzeugs oder eines Endgeräts, zur Latenzkompensation. Das Verfahren weist ein Empfangen mehrerer (z. B. initialer) Vorhersagen, die jeweils mindestens eine (z. B. komprimierte/codierte oder unkomprimierte) Sensorsignalhypothese und mindestens eine (z. B. komprimierte/codierte oder unkomprimierte) Betriebsbefehlhypothese aufweisen, von einer Servervorrichtung auf (z. B. mittels einer Kommunikationsschnittstelle der Clientvorrichtung). Das Verfahren weist ein Erfassen mindestens eines ersten Sensorsignals auf (z. B. mittels einer Sensorik oder einer Benutzereingabeeinrichtung der Clientvorrichtung). Das Verfahren weist ein Senden des mindestens einen ersten Sensorsignals zu der Servervorrichtung auf (z. B. mittels einer Kommunikationsschnittstelle der Clientvorrichtung). Das Verfahren weist ein Abwarten einer vorbestimmten Zeitdauer auf. Das Verfahren weist ein Betreiben der Clientvorrichtung mit dem mindestens einen ersten Betriebsbefehl (z. B. nach Ablauf der vorbestimmten Zeitdauer und/oder mittels einer Aktorik oder einer Benutzerausgabeeinrichtung der Clientvorrichtung) auf, wenn innerhalb der vorbestimmten Zeitdauer mindestens ein erster Betriebsbefehl von der Servervorrichtung in Reaktion auf das Senden des mindestens einen ersten Sensorsignals empfangen wird (z. B. mittels einer Kommunikationsschnittstelle der Clientvorrichtung). Das Verfahren weist ein Auswählen einer der mehreren Vorhersagen in Abhängigkeit von dem mindestens einen ersten Sensorsignal und/oder mindestens einem aktuell erfassten Sensorsignal und den mehreren Sensorsignalhypothesen (z. B. mittels eines Hypothesenzuordners der Clientvorrichtung) und ein Betreiben der Clientvorrichtung mit der mindestens einen Betriebsbefehlhypothese der ausgewählten Vorhersage (z. B. nach Ablauf der vorbestimmten Zeitdauer und/oder mittels einer Aktorik oder einer Benutzerausgabeeinrichtung der Clientvorrichtung) auf, wenn innerhalb der vorbestimmten Zeitdauer kein erster Betriebsbefehl von der Servervorrichtung in Reaktion auf das Senden des mindestens einen ersten Sensorsignals empfangen wird (z. B. mittels einer Kommunikationsschnittstelle der Clientvorrichtung).

Das Verfahren kann vorteilhaft angewendet werden, wenn die üblichen Netzwerk-Latenzen den Anforderungen zum Betreiben der Clientvorrichtung prinzipiell genügen, es aber lokal und auch zeitlich punktuell zu netzwerkbedingten Erhöhungen der Latenzen kommt. Das Verfahren kann ebenso vorteilhaft zur nahtlosen Überbrückung von Verzögerungen verwendet werden, die auftreten, um im Betrieb eine virtualisierte Cloud-Steuerung von einer Instanz auf eine andere Instanz zu verschieben. Die Verschiebung kann beispielsweise einen Wechsel des Cloud-Servers oder einen Wechsel von Cloud auf Edge, da z. B. Latenzen im Kernnetz/öffentlichem Netz zu hoch werden, aufweisen. Die Verschiebung kann auch einen Wechsel einer Netzwerkinfrastruktur von WLAN auf 5G/4G (oder umgekehrt) oder von WLAN zu WLAN aufweisen.

Herkömmlich würden netzwerkbedingte und nicht-netzwerkbedingte Latenzen zu einer negativen Beeinflussung des Betriebs der Clientvorrichtung führen (z. B. Stocken von Bewegungen, ineffizienter Betrieb usw.). Das Verfahren kann vorteilhaft diese negativen Einflüsse zumindest zweitweise kompensieren. Wenn von der Servervorrichtung nicht rechtzeitig Betriebsbefehle empfangen werden, kann auf zuvor empfangene Vorhersagen zurückgegriffen werden. Die genaueste Vorhersage kann dabei durch Abgleich der Sensorsignalhypothesen mit einem aktuellen Sensorsignal erfolgen. Das Verfahren kann eine temporäre Auflösung des Konflikts zwischen Echtzeitanforderungen der Clientvorrichtung und auftretenden Latenzvariationen ermöglichen. Das Verfahren kann ebenfalls eine vergleichsweise kostengünstige und wenig aufwendige Ausstattung der Clientvorrichtung ermöglichen. Rechenintensive Verfahrensschritte können sicher und echtzeitfähig auf die Servervorrichtung ausgelagert werden, ohne dass zeitweise erhöhte Latenzen den Betrieb der Clientvorrichtung wesentlich negativ beeinflussen können. Der lokale Rechenaufwand auf der Clientvorrichtung kann auf ein Minimum reduziert werden. Beispielsweise können auf der Clientvorrichtung noch Softwareknoten für Sensorik und Aktorik verbleiben, während die komplette Steuerungsarchitektur (z. B. lokale und globale Pfadplanung, SLAM, KI, Modellierung etc.) auf die Servervorrichtung ausgelagert werden können. Extern können auf der Servervorrichtung (z. B. Edge oder Cloud-Servervorrichtung) sehr hohe Rechenleistungen und Möglichkeiten zur Skalierung (bspw. Simulation) zur Verfügung. Das Verfahren ist besonders bevorzugt anwendbar bei einem Betrieb mobiler Roboter/Transportsysteme für Indoor- und Outdoor-Anwendungen über die Cloud/Edge. Das Verfahren kann auch vorteilhaft bei autonomen Fahrzeugen, insbesondere bei hohen Geschwindigkeiten, und bei Nutzerinteraktionsprozessen (z. B. Cloud-Computing oder Augmented-Reality-Gerät in Verbindung mit Cloud-Computing zur Auslagerung von Funktionen für die Umgebungswahrnehmung) angewendet werden. Das Verfahren kann beispielsweise auch bei der Nutzung von nicht-echtzeitfähiger ROS(Robot-Operating-System) -Middleware als quasi Industriestandard angewendet werden. Das Verfahren kann prinzipiell geeignet sein für alle möglichen Arten von zeitkritischer Closed-Loop-Steuerung über externe Infrastrukturen, vorzugsweise zur Realisierung sensorgestützter Regelungskreise über Cloud- und Edge-Computing.

Es versteht sich, dass das Verfahren in Kombination mit (herkömmlicher) modellprädiktiver oder modellbasierter Regelung (z. B. autonome Navigation mit Statusschätzer, Modell etc.) funktioniert und diese sinnvoll ergänzen kann, wenn gewünscht.

Es ist möglich, dass die Vorhersagen, die Sensorsignalhypothese und/oder die mindestens eine Betriebsbefehlhypothese vor dem Empfangen dekomprimiert oder decodiert wird. Alternativ kann das Auswählen bspw. in Abhängigkeit der mehreren komprimierten oder codierten Sensorsignalhypothesen erfolgen, und/oder das Betreiben mit der mindestens einen komprimierten oder codierten Betriebsbefehlhypothese der ausgewählten Vorhersage erfolgen.

Bevorzugt können die Verfahrensschritte (Empfangen der mehreren Vorhersagen, Erfassen des mindestens eines ersten Sensorsignals, Senden des mindestens einen ersten Sensorsignals, Abwarten der einer vorbestimmten Zeitdauer usw.) von einer einzigen Clientvorrichtung durchgeführt werden. Es ist aber auch möglich, dass mehrere Clientvorrichtungen vorhanden sind, die die Verfahrensschritte (Empfangen der mehreren Vorhersagen, Erfassen des mindestens eines ersten Sensorsignals, Senden des mindestens einen ersten Sensorsignals, Abwarten der einer vorbestimmten Zeitdauer usw.) zweckmäßig untereinander aufteilen. Beispielsweise könnten eine erste Clientvorrichtung (z. B. Sensorknoten-Clientvorrichtung) und eine zweite Clientvorrichtung (z. B. Befehlsannahmeknoten-Clientvorrichtung) vorhanden sein, die miteinander in Kommunikationsverbindung sind. Die erste Clientvorrichtung könnte beispielsweise das erste Sensorsignal (und bspw. alle weiteren Sensorsignale) mittels einer Sensorik oder einer Benutzereingabeeinrichtung der ersten Clientvorrichtung erfassen. Die zweite Clientvorrichtung könnte die zu betreibende Clientvorrichtung sein. Vorzugsweise könnte das erste Sensorsignal von der Clientvorrichtung direkt zu der Servervorrichtung gesendet werden oder zu der zweiten Clientvorrichtung zum Senden zu der Servervorrichtung gesendet werden. Die erste Clientvorrichtung und/oder die zweite Clientvorrichtung könnte den ersten Betriebsbefehl und/oder die mehreren Vorhersagen empfangen. Die erste Clientvorrichtung oder die zweite Clientvorrichtung könnte das Abwarten und/oder das Auswählen durchführen. Die Clientvorrichtungen könnten ein etwaiges Ergebnis eines Verfahrensschritts zu der jeweils anderen Clientvorrichtung senden (z. B. Senden der mindestens einen Betriebsbefehlhypothese der ausgewählten Vorhersage von der ersten Clientvorrichtung zu der zweiten Clientvorrichtung).

In einem Ausführungsbeispiel weist das Verfahren ferner ein Erfassen mindestens eines initialen Sensorsignals vor dem Erfassen des mindestens einen ersten Sensorsignals, vorzugsweise mindestens einen Zeitschritt oder Betriebstakt vor dem Erfassen des mindestens einen ersten Sensorsignals, auf (z. B. mittels einer Sensorik oder einer Benutzereingabeeinrichtung der Clientvorrichtung). Das Verfahren kann ferner ein Senden des mindestens einen initialen Sensorsignals an die Servervorrichtung aufweisen (z. B. mittels einer Kommunikationsschnittstelle der Clientvorrichtung). Das Empfangen der mehreren Vorhersagen kann bevorzugt in Reaktion auf das Senden des mindestens einen initialen Sensorsignals erfolgen. So kann ermöglicht werden, dass bereits die initialen Vorhersagen vergleichsweise genau sind, da sie auf mindestens einem initialen Sensorsignal basieren.

In einer Weiterbildung weist das Verfahren ein Empfangen mindestens eines initialen Betriebsbefehls von der Servervorrichtung in Reaktion auf das Senden des mindestens einen initialen Sensorsignals, vorzugsweise zusammen mit dem Empfangen der mehreren Vorhersagen, auf (z. B. mittels einer Kommunikationsschnittstelle der Clientvorrichtung). Das Verfahren kann bevorzugt ferner ein Betreiben der Clientvorrichtung mit dem mindestens einen initialen Betriebsbefehl aufweisen (z. B. mittels einer Aktorik oder Benutzerausgabeeinrichtung der Clientvorrichtung), vorzugsweise während der vorbestimmten Zeitdauer, bis zum nächsten Betriebstakt, bis zum Betreiben der Clientvorrichtung mit dem mindestens einen ersten Betriebsbefehl oder bis zum Betreiben der Clientvorrichtung mit der mindestens einen Betriebsbefehlhypothese der ausgewählten Vorhersage. Vorteilhaft wird so ermöglicht, dass das initiale Sensorsignal ebenfalls direkt zum serverseitigen Erstellen eines Betriebsbefehls genutzt werden kann.

In einem weiteren Ausführungsbeispiel wird diejenige Vorhersage (z. B. mittels eines Hypothesenzuordners der Clientvorrichtung) ausgewählt, deren mindestens eine Sensorsignalhypothese mit dem mindestens einen ersten Sensorsignal übereinstimmt oder sich am wenigstens von dem mindestens einen ersten Sensorsignal unterscheidet (z. B. Differenzmethode, Pixelvergleich, Nächster-Nachbar-Heuristik, Differenzermittlung, Lookup-Tabellen (Umsetzungstabellen) oder Zuordnung der passenden Hypothese über künstliche neuronale Netzwerke oder andere KI-Modelle usw.). Vorteilhaft kann so eine Minimierung der Berechnung auf Seiten der Clientvorrichtung durch einen Minimalabgleich von tatsächlichen Sensorsignalen und Sensorsignalhypothesen ermöglicht werden. Es können bspw. auch ein KI-Modell verwendet werden, das dazu ausgebildet ist, Unterschiede in Sensorsignalen zu erkennen.

In einem weiteren Ausführungsbeispiel weist das Verfahren ferner das Senden einer Modellkorrektur basierend auf der mindestens einen Betriebsbefehlhypothese der ausgewählten Vorhersage zu der Servervorrichtung auf (z. B. mittels einer Kommunikationsschnittstelle der Clientvorrichtung). Vorzugsweis wird so ermöglicht, dass das serverseitige Statusabbild der Clientvorrichtung aktualisiert werden kann.

Es ist auch möglich, dass das serverseitige Statusmodell bzw. die Implementierung einer modellprädiktiven Regelung (mit Status-Schätzung/ state estimation) auf der Serverseite ggf. auch ohne clientseitige Modellkorrektur selbstständig den aktuellen Status trotz temporärem Kommunikationsverlust anpassen kann. In diesem Fall bräuchte man die Modellkorrektur nicht explizit auf die Servervorrichtung zurückübertragen. Serverseitig könnte stattdessen eine automatische Adaptierung erfolgen.

In einer Ausführungsform weist das Verfahren ferner ein Empfangen mehrerer weiterer Vorhersagen, die jeweils mindestens eine Sensorsignalhypothese und mindestens eine Betriebsbefehlhypothese aufweisen, von der Servervorrichtung auf (z. B. mittels einer Kommunikationsschnittstelle der Clientvorrichtung), vorzugsweise in Reaktion auf das Senden des mindestens einen initialen Sensorsignals und/oder zusammen mit dem Empfangen der mehrerer Vorhersagen. Das Verfahren kann ferner ein Erfassen mindestens eines zweiten Sensorsignals nach dem Erfassen des mindestens einen ersten Sensorsignals, vorzugsweise einen Betriebstakt nach dem Erfassen des mindestens einen ersten Sensorsignals aufweisen (z. B. mittels einer Sensorik oder einer Benutzereingabeeinrichtung der Clientvorrichtung). Das Verfahren kann ein Senden des mindestens einen zweiten Sensorsignals zu der Servervorrichtung (z. B. mittels einer Kommunikationsschnittstelle der Clientvorrichtung) aufweisen. Das Verfahren kann ein Abwarten einer weiteren vorbestimmten Zeitdauer aufweisen. Das Verfahren kann ein Betreiben der Clientvorrichtung mit mindestens einem zweiten Betriebsbefehl aufweisen (z. B. mittels einer Aktorik oder einer Benutzerausgabeeinrichtung der Clientvorrichtung), wenn innerhalb der weiteren vorbestimmten Zeitdauer der mindestens eine zweite Betriebsbefehl von der Servervorrichtung in Reaktion auf das Senden des mindestens einen zweiten Sensorsignals empfangen wird (z. B. mittels einer Kommunikationsschnittstelle der Clientvorrichtung). Das Verfahren kann ein Auswählen einer der mehreren weiteren Vorhersagen in Abhängigkeit vom dem mindestens einen zweiten Sensorsignal und/oder mindestens einem aktuell erfassten (weiteren) Sensorsignal und den mehreren Sensorsignalhypothesen der mehreren weiteren Vorhersagen (z. B. mittels einer Hypothesenzuordners der Clientvorrichtung) und ein Betreiben der Clientvorrichtung mit der mindestens einen Betriebsbefehlhypothese der ausgewählten Vorhersage der mehreren weiteren Vorhersagen (z. B. mittels einer Aktorik oder einer Benutzerausgabeeinrichtung der Clientvorrichtung) aufweisen, wenn innerhalb der weiteren vorbestimmten Zeitdauer kein zweiter Betriebsbefehl von der Servervorrichtung in Reaktion auf das Senden des mindestens einen zweiten Sensorsignals empfangen wird (z. B. mittels einer Kommunikationsschnittstelle der Clientvorrichtung). Bevorzugt kann das Verfahren somit ermöglichen, dass nicht nur Vorhersagen für den nächsten Zeitschritt empfangen werden, sondern auch für mindestens einen darauffolgenden Zeitschritt. Somit kann das Verfahren eine Echtzeitfähigkeit der Clientvorrichtung auch bei sehr großen Latenzen ermöglichen.

Optional kann das Verfahren ein Senden einer weiteren Modellkorrektur basierend auf der mindestens einen Betriebsbefehlhypothese der ausgewählten Vorhersage der mehreren weiteren Vorhersagen zu der Servervorrichtung aufweisen (z. B. mittels einer Kommunikationsschnittstelle der Servervorrichtung).

In einer Ausführungsvariante wird das mindestens eine erste Sensorsignal (und/oder das mindestens eine initiale Sensorsignal und/oder das mindestens eine zweite Sensorsignal) von einer internen Sensorik, einer Umgebungserfassungssensorik und/oder einer Benutzereingabeeinrichtung der Clientvorrichtung erfasst. Das Verfahren kann somit für eine Vielzahl von möglichen Sensorsignalen anwendbar sein.

In einer weiteren Ausführungsvariante wird mindestens ein Aktor (z. B. ein Lenkaktor, ein Antrieb und/oder ein Ventil) und/oder eine Benutzerausgabeeinrichtung (z. B. eine Anzeigeeinrichtung und/oder ein Lautsprecher) der Clientvorrichtung mittels des mindestens einen ersten Betriebsbefehls betrieben. Das Verfahren kann somit in einer Vielzahl von unterschiedlichen Anwendungsbereichen anwendbar sein.

Ein weiterer Aspekt der vorliegenden Offenbarung betrifft ein Verfahren zum Betreiben einer Servervorrichtung (z. B. lokale Servervorrichtung, Edge-Servervorrichtung oder Cloud-Servervorrichtung) zur Latenzkompensation. Das Verfahren weist ein (z. B. regelbasiertes, erfahrungsbasiertes, modellbasiertes und/oder zufallsbasiertes) Erstellen mehrerer Systemzustandshypothesen bezüglich prädiktiver Systemzustände (z. B. für einen oder mehrere zukünftige Zeitschritte) einer Clientvorrichtung basierend auf einem, vorzugsweise aktuellen, Statusabbild der Clientvorrichtung (z. B. erstellt mittels eines Statusmodellierers der Servervorrichtung) und vorzugsweise einem Umgebungsmodell der Clientvorrichtung auf (z. B. mittels eines Hypothesenerstellers der Servervorrichtung). Das Verfahren weist ferner ein Erstellen mehrerer Vorhersagen, die jeweils mindestens eine Sensorsignalhypothese (z. B. erstellt mittels eines Hypothesenerstellers der Servervorrichtung und/oder mittels einer Simulationsumgebung der Servervorrichtung) und mindestens eine Betriebsbefehlhypothese (z. B. erstellt mittels eines Betriebsbefehlerstellers der Servervorrichtung) aufweisen, basierend auf den mehreren Systemzustandshypothesen auf. Das Verfahren weist ferner ein Senden der mehreren Vorhersagen an die Clientvorrichtung auf (z. B. mittels einer Kommunikationsschnittstelle der Servervorrichtung). Das Verfahren kann vorzugsweise die gleichen Vorteile erzielen, wie hierin bereits für das Verfahren zum Betreiben der Clientvorrichtung offenbart ist.

Es ist möglich, dass die Vorhersagen, die Sensorsignalhypothesen und/oder die Betriebsbefehlhypothesen vor dem Senden komprimiert oder codiert werden.

In einem Ausführungsbeispiel weist das Verfahren ferner ein Empfangen mindestens eines initialen Sensorsignals von der Clientvorrichtung auf (z. B. mittels einer Kommunikationsschnittstelle der Servervorrichtung). Das Erstellen des Statusabbilds und/oder der mehreren Systemzustandshypothesen kann zusätzlich auf dem mindestens einen initialen Sensorsignal basieren.

In einem weiteren Ausführungsbeispiel weist das Verfahren ein Erstellen mindestens eines initialen Betriebsbefehls basierend auf dem Statusabbild und/oder dem mindestens einen initialen Sensorsignal auf (z. B. mittels eines Betriebsbefehlerstellers der Servervorrichtung) und ein Senden des mindestens einen initialen Betriebsbefehls zu der Clientvorrichtung, vorzugsweise zusammen mit den mehreren Vorhersagen, auf (z. B. mittels einer Kommunikationsschnittstelle der Servervorrichtung).

In einer Ausführungsform werden die Sensorsignalhypothesen aus den mehrerer Systemzustandshypothesen und vorzugsweise einem Umgebungsmodell der Clientvorrichtung abgeleitet.

In einer weiteren Ausführungsform werden die Sensorsignalhypothesen mittels einer, vorzugsweise grafischen, Simulationsumgebung der Servervorrichtung aus den mehreren Systemzustandshypothesen abgeleitet. Dies kann ermöglichen, dass auch komplexe Sensorsignalhypothesen synthetisch erstellt werden können, z. B. 2D- oder 3D-Bilddaten.

In einer weiteren Ausführungsform können die Sensorsignalhypothesen durch Hinzufügen einer Störgröße, vorzugsweise Rauschen, durch Rendern (z. B. Bildsynthese) und/oder mittels maschinellen Lernens, vorzugsweise durch Generative-Adversarial-Netzwerke, angepasst werden oder anpassbar sein (z. B. mittels eines Nachbearbeiters der Servervorrichtung). Damit kann ein Realismus der synthetischen Sensorsignalhypothesen vergrößert werden, sodass die Sensorsignalhypothesen den tatsächlichen Sensorsignalen angenähert werden. Vorteilhaft kann so ein clientseitiger Abgleich zwischen den Sensorsignalhypothesen und aktuellen Sensorsignalen verbessert werden.

In einer Ausführungsvariante werden die Betriebsbefehlhypothesen basierend auf den Systemzustandshypothesen (z. B. Modellparameterhypothesen) und den Sensorsignalhypothesen erzeugt (z. B. mittels eines Betriebsbefehlerstellers der Servervorrichtung).

In einer weiteren Ausführungsvariante werden die mehrerer Systemzustandshypothesen, Betriebsbefehlhypothesen und/oder Sensorsignalhypothesen parallel erstellt. Damit kann die hohe zur Verfügung stehende Rechenleistung der Servervorrichtung vorteilhaft genutzt werden, um die Echtzeitfähigkeit des Betriebs der Clientvorrichtung zu unterstützen.

In einem Ausführungsbeispiel weist das Verfahren ein Erstellen mehrerer weiterer Systemzustandshypothesen bezüglich prädiktiver Systemzustände der Clientvorrichtung, die weiter in der Zukunft liegen als die Systemzustandshypothesen, basierend auf dem Statusabbild der Clientvorrichtung, den Systemzustandshypothesen und vorzugsweise einem Umgebungsmodell der Clientvorrichtung auf (z. B. mittels eines Hypothesenerstellers der Servervorrichtung). Das Verfahren kann ferner ein Erstellen mehrerer weiterer Vorhersagen, die jeweils mindestens eine Sensorsignalhypothese (z. B. erstellt mittels eines Hypothesenerstellers und/oder einer Simulationsumgebung der Servervorrichtung) und mindestens eine Betriebsbefehlhypothese (z. B. erstellt mittels eines Betriebsbefehlerstellers der Servervorrichtung) aufweisen, basierend auf den mehreren weiteren Systemzustandshypothesen. Das Verfahren kann ferner ein Senden der mehreren weiteren Vorhersagen an die Clientvorrichtung, vorzugsweise zusammen mit den mehreren Vorhersagen, aufweisen (z. B. mittels einer Kommunikationsvorrichtung der Servervorrichtung). Vorteilhaft können so Vorhersagen für mehrere Zeitschritte im Voraus erstellt und an die Clientvorrichtung übersendet werden.

In einer Ausführungsform wird das Verfahren zum Betreiben der Clientvorrichtung oder das Verfahren zum Betreiben der Servervorrichtung zyklisch wiederholt, vorzugsweise gemäß einem Betriebstakt der Clientvorrichtung.

Vorzugsweise kann das Verfahren ferner ein Empfangen einer Modellkorrektur von der Clientvorrichtung (z. B. mittels einer Kommunikationsschnittstelle der Servervorrichtung) aufweisen. Bevorzugt kann das Statusabbild in Abhängigkeit der empfangenen Modellkorrektur aktualisiert werden (z. B. mittels eines Statusmodellierers der Servervorrichtung).

Ein weiterer Aspekt der vorliegenden Offenbarung betrifft eine Vorrichtung, vorzugsweise Clientvorrichtung (z. B. Transportsystem, Roboter, Fahrzeug oder Endgerät) oder Servervorrichtung (z. B. lokale Servervorrichtung, Edge-Servervorrichtung oder Cloud-Servervorrichtung), die vorzugsweise dazu konfiguriert ist, ein Verfahren wie hierin offenbart auszuführen.

Bevorzugt kann die Clientvorrichtung eine interne Sensorik, eine Umgebungserfassungssensorik, eine Benutzereingabeeinrichtung, eine Kommunikationsschnittstelle, einen Planer, einer Hypothesenzuordner, eine Aktorik und/oder eine Benutzerausgabeeinrichtung aufweisen.

Bevorzugt kann die Servervorrichtung eine Kommunikationsschnittstelle, einen Statusmodellierer, einen Umgebungsmodellierer, einen Hypothesenersteller, eine Simulationsumgebung, einen Nachbearbeiter und/oder einen Betriebsbefehlersteller aufweisen.

Gemäß einem weiteren Aspekt betrifft die vorliegende Offenbarung ein Verfahren zum Betreiben eines Netzwerks mit einer Clientvorrichtung und einer Servervorrichtung. Das Verfahren zum Betreiben des Netzwerks kann die Verfahrensschritte des hierin offenbarten Verfahrens zum Betreiben einer Clientvorrichtung und/oder die hierin offenbarten Verfahrensschritte zum Betreiben einer Servervorrichtung aufweisen.

Gemäß einem weiteren Aspekt betrifft die vorliegende Offenbarung ein Computerprogrammprodukt, das Programmcodebereiche zum Ausführen eines Verfahrens wie hierin offenbart aufweist, wenn das Computerprogrammprodukt auf einer oder mehreren Computern ausgeführt wird.

Es ist möglich, dass das Computerprogrammprodukt auf einem computerlesbaren Medium gespeichert ist.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines Netzwerksystems gemäß einem Ausführungsbeispiel der vorliegenden Offenbarung;
- Figur 2: ein Flussdiagramm eines Verfahrens zum Betreiben einer Clientvorrichtung gemäß einem Ausführungsbeispiel der vorliegenden Offenbarung; und
- Figur 3: ein Flussdiagramm eines Verfahrens zum Betreiben einer Servervorrichtung gemäß einem Ausführungsbeispiel der vorliegenden Offenbarung.

### Ausführliche Beschreibung

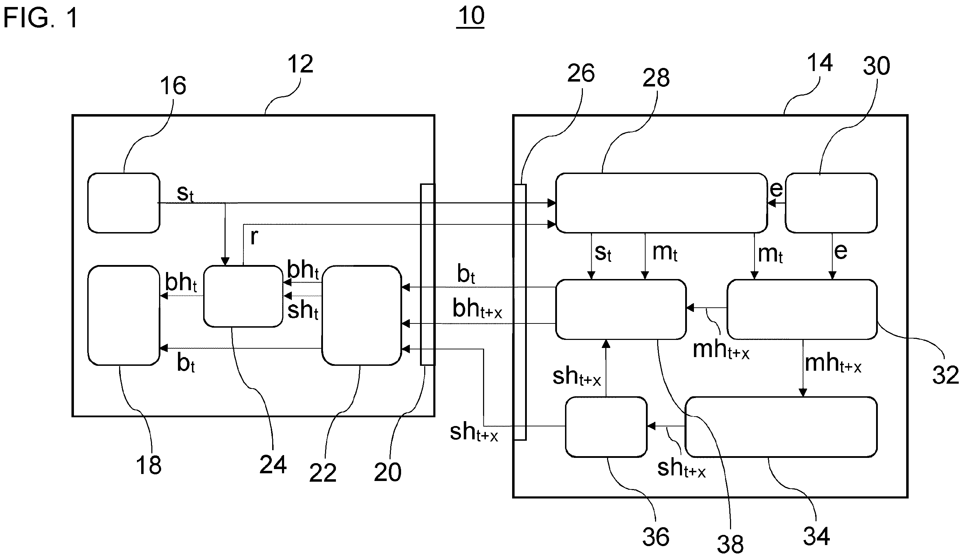

Figur 1 zeigt ein Netzwerksystem 10. Das Netzwerksystem 10 weist eine Clientvorrichtung 12 und eine Servervorrichtung 14 auf. Die Clientvorrichtung 12 und die Servervorrichtung 14 können miteinander kommunizieren, z. B. kabelgebunden oder kabellos.

Die Clientvorrichtung 12 ist mobil oder stationär und kann bspw. für Indoor- und/oder Outdooranwendungen konzipiert sein. Die Clientvorrichtung 12 kann jegliche Art von Vorrichtung sein, bei der eine Auslagerung von Rechenleistung auf die Servervorrichtung 14 möglich ist. Bevorzugt werden hierbei rechenintensive Probleme auf die Servervorrichtung 14 ausgelagert. Die Clientvorrichtung 12 kann somit beispielsweise jegliche Art von Maschine, Fahrzeug oder Endgerät sein. Besonders bevorzugt ist die Clientvorrichtung 12 als ein Transportsystem oder ein Roboter ausgeführt, zum Beispiel als fahrerloses Transportfahrzeug (FTF, engl. AGV = automated guided vehicle) zum Materialtransport. Es ist auch möglich, dass die Clientvorrichtung 12 beispielsweise als ein automatisiertes Kraftfahrzeug oder ein (Benutzer-) Endgerät (z. B. AR/VR-Datenbrille, Desktop-PC, Smartphone, Tablet, Laptop, Terminal usw.) ausgeführt ist.

Die Servervorrichtung 14 kann jegliche Art von Vorrichtung sein, auf die Rechenleistung von der Clientvorrichtung 12 ausgelagert werden kann. Die Servervorrichtung 14 kann beispielsweise eine Cloud-Servervorrichtung, eine Edge-Servervorrichtung oder jegliche andere Servervorrichtung in einem Netzwerk sein. Bevorzugt kann die Servervorrichtung 14 in einer sogenannten Cloud-Computing-Infrastruktur implementiert sein.

Die Clientvorrichtung 12 weist mindestens eine Einrichtung 16 zur Erfassung eines aktuellen Sensorsignals und mindestens eine Einrichtung 18 zum Ausführen eines Betriebsbefehls auf.

Die Einrichtung 16 kann aktuelle Sensorsignale von einer oder mehreren Quellen erfassen und ausgeben. Figur 1 zeigt die Ausgabe eines aktuellen Sensorsignals schematisch mit dem Bezugszeichen s_t, wobei t beispielsweise für einen Zeitpunkt, einen Zeitraum, einen Zeitschritt oder einen Betriebstakt der Clientvorrichtung 12 stehen kann, wie bei allen anderen hierin genannten Parametern. Nachfolgend wird der Einfachheit halber nur noch von Zeitschritten t gesprochen. Die Sensorsignale können von der Einrichtung 16 zweckmäßig in einem hohen Takt erfasst werden, z. B. im zweistelligen ms-Bereich.

Beispielsweise kann die Einrichtung 16 als eine Umgebungserfassungssensorik und/oder interne Sensorik der Clientvorrichtung 12 ausgeführt sein. Die Sensorik kann das Sensorsignal berührungslos oder berührend erfassen. Die Sensorik kann beispielsweise ein Radar, einen Laserscanner (Lidar), einen Ultraschallsensor, einen Geschwindigkeitssensor, einen Beschleunigungssensor, einen Wegsensor, einen Winkelsensor, ein Positionssensor (bzw. Positionsbestimmungssystem - z. B. GPS), ein Thermometer, ein Hygrometer, ein Manometer und/oder ein Mikrofon aufweisen. Es ist auch möglich, dass die Einrichtung 16 eine Benutzereingabeeinrichtung aufweist, mit der Benutzereingaben in Form von Sensorsignalen, erfassbar sind. Die Benutzereingabeeinrichtung kann Benutzereingaben visuell, akustisch oder haptisch erfassen. Die Benutzereingabeeinrichtung kann beispielsweise eine Kamera, einen Schalter, eine Tastatur, eine Maus, einen Knopf, einen Controller, eine berührungsempfindliche Anzeige, ein Mikrofon und/der jegliches anders Bediengerät aufweisen.

Die Einrichtung 18 kann empfangene Betriebsbefehle zum Betreiben der Clientvorrichtung 12 ausführen. In Figur 1 ist schematisch dargestellt, dass die Einrichtung 18 einen Betriebsbefehl (gekennzeichnet als b_t in Figur 1) oder eine Betriebsbefehlhypothese (gekennzeichnet als bh_t in Figur 1) empfangen kann. Je nach Empfang kann die Einrichtung 18 den Betriebsbefehl b_t oder die Betriebsbefehlhypothese bh_t ausführen. Ein Betrieb der Clientvorrichtung 12 kann somit entsprechend dem Betriebsbefehl b_t oder der Betriebsbefehlhypothese bh_t angepasst werden.

Die Einrichtung 18 kann beispielsweise mindestens einen Aktor, z. B. Lenkaktor, Antrieb, Ventil usw., aufweisen. Es ist auch möglich, dass die Einrichtung 18 eine Benutzerausgabeeinrichtung aufweist, mit der Informationen an einen Benutzer ausgebbar sind. Die Benutzerausgabeeinrichtung kann Informationen visuell, akustisch und/oder haptisch ausgeben. Beispielsweise kann die Benutzerausgabeeinrichtung eine Anzeige, einen Lautsprecher, einen Signalgeber usw. aufweisen.

Die Clientvorrichtung 12 weist ferner eine Kommunikationsschnittstelle 20, einen Planer bzw. Scheduler 22 und einen Hypothesenzuordner bzw. Hypothesen-Matcher 24 auf. Vorzugsweise sind der Planer 22 und der Hypothesenzuordner 24 als funktionale Einheiten eines Softwareprogramms ausgeführt.

Mittels der Kommunikationsschnittstelle 20 kann die Clientvorrichtung 12 mit der Servervorrichtung 14 kommunizieren. Die Kommunikationsschnittstelle 20 kann beispielsweise kabellos oder kabelgebunden mit der Servervorrichtung 14 kommunizieren. Die kabellose Kommunikation kann vorzugsweise über ein 4G-Funknetzwerk, ein 5G-Funknetzwerk oder WLAN erfolgen. Die kabelgebundene Kommunikation kann beispielsweise über ein BUS-System oder Ethernet implementiert sein.

Die Kommunikationsschnittstelle 20 kann beispielsweise Sensorsignale s_t, die von der Einrichtung 16 erfasst wurden, an die Servervorrichtung 14 senden. Die Kommunikationsschnittstelle 20 kann auch Modellkorrekturen r von dem Hypothesenzuordner 24 an die Servervorrichtung 14 senden.

Mittels der Kommunikationsschnittstelle 20 können Betriebsbefehle b_t, Betriebsbefehlhypothesen bh_t+x (für x Zeitschritte nach dem Zeitschritt t) und Sensorsignalhypothesen sh_t+x (für x Zeitschritte nach dem Zeitschritt t) empfangen werden.

Die Betriebsbefehlhypothesen bh_t+x und Sensorsignalhypothesen sh_t+x sind in Vorhersagen gruppiert. Jede Vorhersage weist mindestens eine Sensorsignalhypothese sh_t+x und mindestens eine Betriebsbefehlhypothese bh_t+x auf. Die Sensorsignalhypothesen sh_t+x unterschiedlicher Vorhersagen unterscheiden sich voneinander. Die Betriebsbefehlhypothese bh_t+x unterschiedlicher Vorhersagen können sich voneinander unterscheiden oder gleich sein. Die Kommunikationsschnittstelle 20 kann Vorhersagen für nur einen zukünftigen Zeitschritt (t+1) oder für mehrere zukünftige Zeitschritte (t+1, t+2 und ggf. mehr) von der Servervorrichtung 14 empfangen.

Die Betriebsbefehle b_t, Betriebsbefehlhypothesen bh_t+x und/oder Sensorsignalhypothesen sh_t+x können in getrennten Nachrichten oder gemeinsamen Nachrichten übersandt und empfangen werden. Die Kommunikationsschnittstelle 20 kann die empfangenen Betriebsbefehle b_t, Betriebsbefehlhypothesen bh_t+x und Sensorsignalhypothesen sh_t+x zu dem Planer 22 leiten.

Der Planer 22 prüft, ob für den nächsten Zeitschritt t ein Betriebsbefehl b_t eingegangen ist oder nicht. Ist ein Betriebsbefehl b_t rechtzeitig eingegangen, kann dieser an die Einrichtung 18 weitgeleitet werden. Bei ausreichenden Latenzen und passender Antwortzeit können somit die extern von der Clientvorrichtung 12 generierten Betriebsbefehle b_t im passenden Takt oder Zeitschritt an die Einrichtung 18 (bspw. Aktorik) weitergeleitet werden.

Ist innerhalb einer vorbestimmten Zeitdauer hingegen kein Betriebsbefehl beim Planer 22 eingegangen (z. B. aufgrund von Paketverlusten oder vergrößerten Latenzen), kann der Planer 22 bereits zuvor für den nächsten Zeitschritt empfangene Betriebsbefehl- und Sensorsignalhypothesen bh_t und sh_t an den Hypothesenzuordner 24 leiten. Es können somit die für den nächsten Zeitschritt extern von der Clientvorrichtung 12 generierten Vorhersagen in Form von (synthetischen) Sensorwerten (=Sensorsignalhypothesen sh_t) und entsprechenden Aktionen (= Betriebsbefehlhypothesen bh_t) an den Hypothesenzuordner 24 geleitet werden. Der Planer 22 verwaltet hierfür die zuvor für vorzugsweise mehrere Zeitschritte im Voraus von der Servervorrichtung 14 empfangenen Vorhersagen, also Betriebsbefehl- und Sensorsignalhypothesen bh_t und sh_t.

Der Planer 22 kann auch nicht rechtzeitig und/oder nicht vollständig empfangene Betriebsbefehle b_t, Betriebsbefehlhypothesen bh_t+x und Sensorsignalhypothesen sh_t+x aussortieren.

Der Hypothesenzuordner 24 kann die Betriebsbefehl- und Sensorsignalhypothesen bh_t und sh_t von dem Planer 22 empfangen, d.h. die mehreren Vorhersagen für den Zeitschritt t. Zusätzlich kann der Hypothesenzuordner 24 die Sensorsignale s_t empfangen. Der Hypothesenzuordner 24 kann die Sensorsignalhypothesen sh_t mit den Sensorsignalen s_t vergleichen. Der Hypothesenzuordner wählt diejenige Sensorsignalhypothese sh_t aus, die dem Sensorsignal s_t am nächsten kommt oder sogar mit diesem übereinstimmt. In anderen Worten, es findet ein Matching zwischen den mehreren Sensorsignalhypothesen sh_t und dem Sensorsignal s_t statt.

Die Auswahl derjenigen Sensorsignalhypothese sh_t, die dem Sensorsignal s_t am nächsten kommt, ist zweckmäßig an die jeweilige Art des Sensorsignals s_t angepasst. Besteht das Sensorsignal s_t (sowie die Sensorsignalhypothese) bspw. lediglich in einem einfachen nummerischen Wert (z. B. Druckwert, Temperaturwert, Geschwindigkeitswert, Abstandswert, Beschleunigungswert, Positionswert usw.), so kann vorzugsweise diejenige Sensorsignalhypothese sh_t ausgewählt werden, deren Differenz zum Sensorsignal s_t am kleinsten ist. Besteht das Sensorsignal bspw. in einer Tastenkombination (z. B. Pfeiltaste links), kann vorzugsweise diejenige Sensorsignalhypothese sh_t ausgewählt werden, die mit dieser Tastenkombination identisch ist oder dieser zumindest im Wesentlichen entspricht. Besteht das Sensorsignal in komplexeren Informationen, z. B. Bilddaten oder Punktwolken, so können entsprechend angepasste Algorithmen (z. B. Nächster-Nachbar-Heuristik, Schwellwertvergleich) von dem Hypothesenzuordner 24 zum Auswählen der am nächsten kommenden Sensorsignalhypothese sh_t verwendet werden. Bei Bilddaten kann bspw. auch auf einen Pixelvergleich zwischen den mehreren Sensorsignalhypothese sh_t und dem Sensorsignal zurückgegriffen werden. Es können auch die jeweiligen Varianten voneinander abgezogen werden. Allgemein wird auf der Clientvorrichtung 12 ein möglichst einfacher Abgleich des aktuellen Sensorsignalwerts s_t mit den Sensorsignalhypothesen sh_t durchgeführt. Dieser Abgleich sollte mit minimaler Rechenleistung durchführbar sein, um eine ggf. angestrebte Taktzeit erreichen zu können.

Die aus dem mehreren Sensorsignalhypothesen s_t ausgewählte Sensorhypothese ist Teil einer Vorhersage, die auch mindestens eine Betriebsbefehlhypothese bh_t aufweist. Der Hypothesenzuordner 24 leitet die mindestens eine Betriebsbefehlhypothese bh_t, die der ausgewählten Sensorsignalhypothese sh_t zugeordnet ist, (bzw. der ausgewählten Vorhersage) an die Einrichtung 18.

Es ist möglich, dass die Clientvorrichtung 12 aus mehreren Quellen Sensorsignale s_t erfasst und an den Hypothesenzuordner 24 leitet. Die von den Hypothesenzuordner 24 empfangenen Vorhersagen könnten jeweils für eine oder mehrere der Quellen eine Sensorsignalhypothese sh_t aufweisen.

Es ist auch möglich, dass die Clientvorrichtung 12 keine der Sensorsignalhypothesen sh_t auswählt, weil keine der Sensorhypothese sh_t nahe genug an das Sensorsignal s_t herankommt. Für eine solche Prüfung können bspw. entsprechende Schwellwerte oder Grenzwerte im Hypothesenzuordner 24 gespeichert sein. In einem solchen Fall kann bspw. ein vorgebbarer Notbetriebsbefehl zu der Einrichtung 18 gesendet werden, der die Einrichtung 18 oder die Clientvorrichtung 12 bspw. verlangsamt, in einen sicheren Zustand überführt oder stilllegt. Insbesondere bei mobilen Robotern, Fahrzeugen und Transportsystemen als Clientvorrichtungen 12 kann das Fahrverhalten entsprechend adaptiv angepasst werden (z. B. Verringerung der Geschwindigkeit).

Es ist ebenfalls möglich, dass der Hypothesenzuordner 24 eine Modellkorrektur r erstellt, die basierend auf der ausgewählten Vorhersage und vorzugsweise auf dem Unterschied zwischen der ausgewählten Sensorsignalhypothese sh_t und dem Sensorsignal s_t basiert. Die Modellkorrektur r kann mittels der Kommunikationsschnittstelle 20 an die Servervorrichtung 14 gesendet werden. Die Modellkorrektur r kann von der Servervorrichtung 14 bspw. dazu verwendet werden, ein Status- bzw. Zustandsabbild der Clientvorrichtung 12 zu aktualisieren.

Die Servervorrichtung 14 weist eine Kommunikationsschnittstelle 26, einen Statusmodellierer 28, einen Hypothesenersteller 32 und einen Betriebsbefehlersteller 38 auf. Die Servervorrichtung 14 kann ferner bspw. einen Umgebungsmodellierer 30, eine Simulationsumgebung 34 und/oder einen Nachbearbeiteter 36 aufweisen. Der Statusmodellierer 28, der Hypothesenersteller 32, die Simulationsumgebung 34, der Betriebsbefehlersteller 38, das Umgebungsmodellierer 30 und/oder der Nachbearbeiteter 36 sind vorzugsweise als funktionale Einheiten eines Softwareprogramms ausgeführt.

Die Kommunikationsschnittstelle 26 kann die Sensorsignale s_t und ggf. die Modellkorrekturen r empfangen. Die empfangenen Sensorsignale s_t und Modellkorrekturen r können an den Statusmodellierer 28 geleitet werden. Die Kommunikationsschnittstelle 26 kann zudem Betriebsbefehle b_t und mehrere Vorhersagen, die jeweils mindestens eine Sensorsignalhypothese sh_t+x sowie mindestens eine Betriebsbefehlhypothese bh_t+x aufweisen, an die Clientvorrichtung 12 senden.

Es ist möglich, dass die Servervorrichtung 14 ein sogenanntes Quality Gate aufweist, um nicht rechtzeitig empfangene Sensorsingale auszusortieren.

Der Statusmodellierer 28 weist ein datenbasiertes Abbild oder Statusmodell der Clientvorrichtung 12 auf. Sofern die Clientvorrichtung 12 mit einer Umgebung interagiert, kann hier zusätzlich auch ein datenbasiertes Umgebungsmodell e einbezogen werden. Basierend auf den empfangenen Sensorsignalen s_t und ggf. dem Umgebungsmodell e und/oder der Modellkorrektur r kann das Statusmodell aktualisiert werden. So kann bspw. stets ein aktueller Status bzw. Zustand der Clientvorrichtung 12 modelliert werden. Für jeden Zeitschritt t kann der Statusmodellierer 28 relevante Modellparameter m_t an den Betriebsbefehlersteller 38 und den Hypothesenersteller 32 ausgeben. Die Modellparameter m_t können aus dem Statusmodell unter Berücksichtigung der Sensorsignale s_t und ggf. des Umgebungsmodells bspw. über Kennfelder, Tabellen, Zuordnungen, Algorithmen usw. abgeleitet werden. Die Modellparameter m_t sind abhängig von der Clientvorrichtung 12 gewählt. Zusätzlich können die Sensorsignale s_t an den Betriebsbefehlersteller 38 ausgegeben werden.

Der Umgebungsmodellierer 30 kann ein datenbasiertes Abbild der Umgebung der Clientvorrichtung 12 aufweisen und als Umgebungsmodell e ausgeben. Es ist möglich, dass das Umgebungsmodell e fest vorgegeben und unveränderlich ist, z. B. Kartendaten. Es ist allerdings auch möglich, dass der Umgebungsmodellierer 30 das Umgebungsmodell e anpassen kann, z. B. in Reaktion auf eine Wechselwirkung zwischen der Clientvorrichtung 12 auf der tatsächlichen Umgebung (z. B. Baumaschine, Fertigungsmaschine). Veränderungen an dem Umgebungsmodell e können bspw. mittels Informationen, die aus den Sensorsignalen s_t abgeleitet werden, angepasst werden.

Es ist möglich, dass das Umgebungsmodell e mittels maschinellem Lernen erst während der Nutzung der Clientvorrichtung 12 erstellt wird (z. B. SLAM), während des Betriebs aktualisiert oder optimiert wird, z. B. mittels Sensorsignalen von der Clientvorrichtung 12. Es ist auch möglich, dass das Umgebungsmodell e (ggf. erfahrungsbasiert) ein spontanes Auftauchen von nicht-kartierten Hindernissen bei einer autonomen Navigation berücksichtigen oder vorhersagen kann.

Der Hypothesenersteller 32 empfängt die Modellparameter m_t sowie ggf. das Umgebungsmodelle. Der Hypothesenersteller 32 liegt somit eine hinreichend genaue Schätzung des aktuellen Systemzustands der Clientvorrichtung 12 (bei mobilen Robotern bspw. Position des Roboters auf globaler Karte, erkannte Hindernisse, etc.) vor. Der Hypothesenersteller 32 erstellt nur Vorhersagen bzw. Hypothesen zu wahrscheinlichen zukünftigen Systemzuständen der Clientvorrichtung 12, die jeweils entsprechende Modellparameterhypothesen mh_t+x aufweisen. Die Hypothesen enthalten somit Daten zu möglichen, vorzugsweise wahrscheinlichen, Zuständen der Clientvorrichtung 12 in der Zukunft. Beispielsweise kann der Hypothesenersteller Lookup-Tabellen (Umsetzungstabellen) zur Erstellung der Systemzustandshypothesen verwenden.

Der Hypothesenersteller 32 erstellt für mindestens einen zukünftigen Zeitschritt t+1, vorzugsweise jedoch mehrere zukünftige Zeitschritte t+x, parallel jeweils mehrere Hypothesen mit zugehörigen Modellparameterhypothesen mh_t+x zu zukünftigen Systemzuständen der Clientvorrichtung 12. Hierbei können beispielsweise empirische, statistische oder Künstliche-Intelligenz-Methoden oder Modelle verwendet werden. Prinzipiell kann die Hypothesenerstellung regelbasiert, erfahrungsbasiert, modellbasiert, zufallsbasiert oder als Kombination zumindest einiger der vorgenannten Möglichkeiten erfolgen. Zweckmäßig können auch Interpolationen und/oder Extrapolationen vorgenommen werden. Bevorzugt werden die Methoden oder Modelle auch eingesetzt, um den Raum der Hypothesengenerierung zu begrenzen, präzisere Abschätzungen über zukünftige Zustände zu erhalten und somit die Anzahl der zu erzeugenden Hypothesen stark zu reduzieren. Die Wahl der Zeitschritte kann hier bspw. einer Betriebstaktfrequenz der Clientvorrichtung 12 entsprechen und/oder zweckmäßig mehrere abhängige Taktschritte in die Zukunft reichen (bspw. repräsentiert durch (z. B. gewichtete) Graphen oder Entscheidungsbäume).

Die erhaltenen Hypothesen sind wiederum durch die jeweils relevanten Modellparameterhypothesen mh_t+x (bspw. Position, Geschwindigkeit, mögliche Störeinflüsse) charakterisiert. Die Modellparameterhypothesen mh_t+x können auch abstrakt vorliegen. Die erstellten Modellparameterhypothesen mh_t+x können an den Betriebsbefehlersteller 38 weitergeleitet werden.

Es ist möglich, dass die Systemzustandshypothesen u.a. auf Basis von maschinellem Lernen erstellt werden. Beispielsweise kann die Umgebung und Wahrscheinlichkeiten für bestimmte Vorgänge im praktischen Einsatz angelernt werden, z. B. über neuronale Netzwerke. Ggf. kann eine Verfeinerung oder Anpassung eines Initialmodells durch empirische Daten zur Laufzeit erfolgen.

Zusätzlich kann bspw. eine sogenannte LSTM-Technik (engl. long short-term memory; deutsch: langes Kurzzeitgedächtnis) beim Anpassen des KI-Modells / maschinellen Lernens angewendet werden. Das KI-Modell kann im Betrieb basierend auf empirischen Daten/Gegebenheiten der Umgebung angepasst werden. Das KI-Modell kann in der Praxis des jeweiligen Anwendungsfalls lernen, welche hypothetischen Zustände basierend auf dem aktuellen Status eher wahrscheinlich sind. Somit kann man beispielsweise über inhärente Kenntnis der Umgebung zielgerichteter (auf Erfahrung basierende) passendere bzw. genauere Hypothesen erzeugen.

Es ist auch möglich, dass für die (modellbasierte) Erstellung der Hypothesen ein sogenannter digitaler Zwilling verwendet wird. Der digitale Zwilling kann bspw. ein (Echtzeit-) Abbild der Umgebung beinhalten. Für den Fall eines mobilen Transportsystems (z. B. AGV) kann der digitale Zwilling bspw. ein Echtzeit-Abbild der Umgebung optional mit Position und/oder Route mindestens eines weiteren mobilen Transportsystems und/oder Position und/oder Bewegung anderer Objekte aufweisen. Die entsprechenden Informationen, auf denen der digitale Zwilling basiert, können bspw. durch Empfangen anderen (z. B. statischer) Kamera- oder Sensorinformationen bezüglich der Umgebung erhalten werden. Die Informationen können zusätzlich oder alternativ beispielsweise auch von einem (z. B. Flotten-) Management-System empfangen werden. Die Verwendung des digitalen Zwillings kann dabei helfen, noch genauere Hypothesen insbesondere bezüglich potentieller Kollisionsobjekten zu erzeugen.

Die Sensorsignalhypothesen sh_t+x können von dem Hypothesenersteller 32 ggf. direkt von den Modellparameterhypothesen mh_t+x und/oder den zugehörigen, vorhergesagten Statusabbildungen abgeleitet oder geschätzt werden. Dies kann zweckmäßig dann möglich sein, wenn die Sensorsignale s_t bzw. die Sensorsignalhypothesen sh_t wenig komplex sind, z. B. einfache numerische Werte oder Odometriedaten. Der Hypothesenersteller 32 kann die erstellten Sensorsignalhypothesen sh_t+x (zusammen mit den erstellten Modellparameterhypothesen mh_t+x) an den Betriebsbefehlersteller 38 leiten (nicht in Figur 1 dargestellt).

Bei komplexeren Sensorsignalen, z. B. bei optischer Sensorik, kann es hingegen vorteilhaft sein, die Modellparameterhypothesen mh_t+x an die Simulationsumgebung 34 zum Erstellen der Sensorsignalhypothesen sh_t+x zu leiten. Die Simulationsumgebung 34 kann verschiedene Instanzen (bspw. auf verschiedenen virtuellen Maschinen) nutzen, um die Sensorsignalhypothesen sh_t+x durch virtuelle Sensoren zu ermitteln. Diese kann im Sinne des Cloud-Computing mittels der Servervorrichtung 14 sehr effizient parallel für eine große Menge möglicher Zustände durchgeführt werden. Das Ergebnis bilden bspw. synthetische 2D- oder 3D-Bilddaten, Punktwolken oder allgemein Verteilungen.

Die Simulationsumgebung 34 kann beispielsweise als eine grafische Simulationsumgebung implementiert sein. Die Simulationsumgebung 34 kann auf Basis der Modellparameterhypothesen mh_t+x und ggf. des Umgebungsmodells zukünftige Systemzustände grafisch abbilden. Über simulierte bzw. virtuelle Sensorik können die Sensorsignalhypothesen sh_t+x aus der Simulationsumgebung 34 abgeleitet werden. Die Sensorsignalhypothesen sh_t+x stellen somit künstlich bzw. synthetisch erzeugte Sensorsignale dar. Auf dieser Basis kommen simulierte Sensoren zum Einsatz, die die Hypothese um die jeweiligen Sensorwerte ergänzen. Derart lassen sich bspw. synthetische Laser-/Lidar- sowie Kamerabilder in 2D und 3D erzeugen.

Zum Fördern eines Minimalabgleichs zwischen den Sensorsignalhypothesen sh_t(+x) und den Sensorsignalen s_t kann es zudem vorteilhaft sein, die Sensorsignalhypothesen sh_t+x mittels des Nachbearbeiters 36 nachzubearbeiten, vorzugsweise um diese realistischer zu machen.

Der Nachbearbeiter 36 kann zum Steigern des Realismus der Sensorsignalhypothesen sh_t+x verschiedene spezifische Nachverarbeitungsschritte an den Sensorsignalhypothesen sh_t+x vornehmen, wenn gewünscht. Der Nachbearbeiter 36 kann bspw. Störgrößen, wie Rauschen, hinzufügen oder ein realistisches Rendern von Bilddaten vornehmen. Der Nachbearbeiter kann auch KI-basierte Verfahren zur Erzeugung von möglichst realen Sensordaten aus synthetischen Daten nutzen. Beispielsweise kann der Nachbearbeiter 36 hierfür sogenannte Generative Adversarial Networks (GANs) nutzen.

Der Betriebsbefehlersteller 38 kann die Modellparameter m_t und die zugehörigen Sensorsignale s_t sowie die Modellparameterhypothesen mh_t+x und die zugehörigen Sensorsignalhypothesen sh_t+x empfangen. Über Planungs-/Steuerungs- und/oder Regelungsfunktionen kann der Betriebsbefehlersteller 38 einerseits Betriebsbefehle b_t aus den Modellparametern m_t und den zugehörigen Sensorsignalen s_t erstellen. Ebenso kann der Betriebsbefehlersteller 38 aus den Modellparameterhypothesen mh_t+x und den zugehörigen Sensorsignalhypothesen sh_t+x mehrere Betriebsbefehlhypothesen bh_t+x erstellen. So ergeben sich mehrere Vorhersagen für jeden zukünftigen betrachteten Zeitschritt t. Jede Vorhersage kann dabei mindestens eine Sensorsignalhypothese sh_t+x (z. B. abhängig von einer Sensoranzahl der Einrichtung 16) und mindestens eine Betriebsbefehlhypothese bh_t+x (z. B. abhängig von einer Aktoranzahl der Einrichtung 18) aufweisen. Die mehreren Vorhersagen (sh_t+x und bh_t+x) und die Betriebsbefehle b_t können mittels der Kommunikationsschnittstelle 26 zu der Clientvorrichtung 12 gesendet werden.

Es ist möglich, dass die Sensorsignalhypothesen sh_t+x vor dem Übertragen mittels der Kommunikationsschnittstelle 26 komprimiert bzw. codiert werden. Die komprimierten Sensorsignalhypothesen sh_t+x können nach dem Empfang mittels der Kommunikationsschnittstelle 20 dekomprimiert werden. Dies kann besonders vorteilhaft sein, wenn die Sensorsignalhypothesen sh_t+x Bilddaten aufweisen und/oder viele Sensorsignalhypothesen sh_t+x übertragen werden und/oder nur begrenzter Bandbreite zur Übertragung zur Verfügung steht. Beispielsweise können nur reduzierte Differenzsignale und/oder -befehle übertragen werden. Hierbei können auch gängige Verfahren zur Sensordatenkompression bzw. Codierung eingesetzt werden.

Es ist auch möglich, dass die Hypothesenzuordnung (mittels des Hypothesenzuordners 24) direkt mittels der komprimierten bzw. codierten Sensorsignalhypothesen sh_t+x durchgeführt wird. Dies kann ggf. auch schon die Generierung der Hypothesen effizienter machen, sodass weniger Rechenzeit auf der Seite der Servervorrichtung 14 benötigt wird.

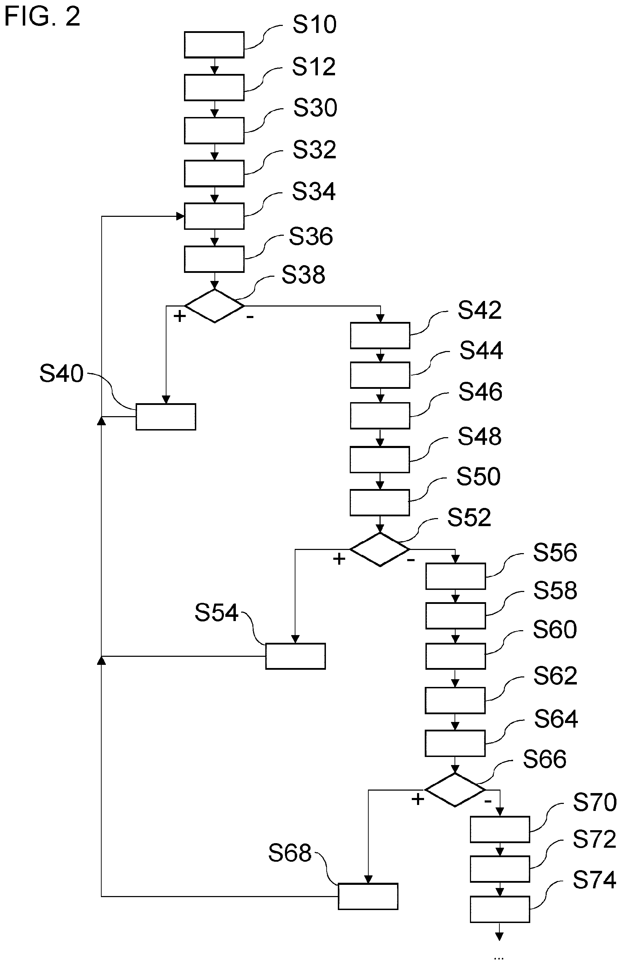

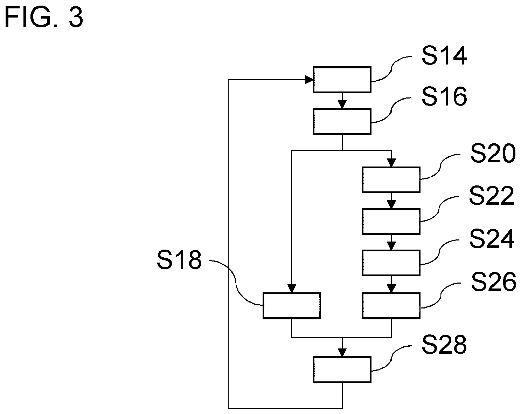

Zum Verbessern des Verständnisses ist nachfolgend unter Bezugnahme auf alle Figuren ein Verfahren zum Betreiben der Clientvorrichtung 12 (siehe Figur 2) und der Servervorrichtung 14 (siehe Figur 3) beschrieben. Die Erklärung erfolgt der Einfachheit halber für ein Beispiel, bei der die Einrichtung 16 nur einen Sensor und die Einrichtung 18 nur einen Aktor aufweist. Es versteht sich, dass die zugrundeliegende Lehre auch bei einer Clientvorrichtung 12 mit mehreren Sensoren und/oder mehreren Aktoren angewendet werden kann. Auch wenn die einzelnen Verfahrensschritte sequentiell dargestellt sind, ist es möglich, einige Verfahrensschritte parallel durchzuführen, um z. B. Zeit zu sparen.

Figur 2 zeigt zunächst die Verfahrensschritte S10 und S12. Im Schritt S10 kann die Einrichtung 16 ein aktuelles Sensorsignal erfassen, z. B. ein initiales Sensorsignal für einen initialen Zeitschritt (z. B. t=0). Im Schritt S12 kann die Kommunikationsschnittstelle 20 das initiale Sensorsignal an die Kommunikationsschnittstelle 26 der Servervorrichtung 14 senden.

Figur 3 zeigt eine Reaktion der Servervorrichtung 14 auf das initiale Sensorsignal.

In einem Schritt S14 wird das initiale Sensorsignal mittels der Kommunikationsschnittstelle 26 von der Clientvorrichtung 12 empfangen. In einem Schritt S16 erstellt der Statusmodellierer 28 einen oder mehrere initiale Modellparameter. Die initialen Modellparameter werden zu dem Betriebsbefehlersteller 38 geleitet. Zusätzlich wird das initiale Sensorsignal zu dem Betriebsbefehlersteller 38 geleitet.

In einem Schritt S18 erstellt der Betriebsbefehlersteller 38 aus dem mindestens einen initialen Modellparameter und dem Sensorsignal einen initialen Betriebsbefehl für die Einrichtung 18. Parallel dazu können die Schritte S20, S22, S24 und/oder S26 ausgeführt werden.

Im Schritt S20 erstellt der Hypothesenersteller 32 mehrere Systemzustandshypothesen für mögliche zukünftige Zustände der Clientvorrichtung 12 für mehrere zukünftige Zeitschritte, z. B. 2, 3 oder mehr Zeitschritte. Für die mehreren Systemzustandshypothesen liegen somit auch jeweils Modellparameterhypothesen vor. Im Schritt S22 werden Sensorsignalhypothesen erstellt, z. B. von dem Hypothesenersteller 32 oder der Simulationsumgebung 34. Es werden mehrere Sensorsignalhypothesen je betrachteten zukünftigen Zeitschritt erstellt. Im Schritt S24 können die Sensorsignalhypothesen mittels des Nachbearbeiters 36 angepasst werden, wenn gewünscht und vorhanden. Im Schritt S26 erstellt der Betriebsbefehlersteller 38 aus den Modellparameterhypothesen und den Sensorsignalhypothesen mehrere Betriebsbefehlhypothesen für die Einrichtung 18, nämlich für jeden betrachteten zukünftigen Zeitschritt jeweils mehrere Betriebsbefehlhypothesen. Je eine der Betriebsbefehlhypothesen und eine je eine der Sensorsignalhypothesen bildet eine Vorhersage. Die Zuordnung erfolgt so, dass die jeweilige Betriebsbefehlhypothese derjenigen Sensorhypothese zugeordnet ist, aus der sie abgeleitet ist. Die Betriebshypothese und die Sensorhypothese der gleichen Vorhersage basieren auf der oder den gleichen Modellparameterhypothesen.

Es ist auch möglich, dass eine Initialisierung des Hypothesenerstellers 32 nicht erst mit Empfang des initialen Sensorsignals durchgeführt wird, sondern z. B. auf Basis von Basiswerten oder Erfahrungswerten usw.

Im Schritt S28 sendet die Kommunikationsschnittstelle die initialen Vorhersagen und den initialen Betriebsbefehl an die Clientvorrichtung 12. Die Servervorrichtung 14 "lauscht" weiter nach neuen Sensorsignalen und ggf. Modellkorrekturen im Schritt S14.

Unter erneuter Bezugnahme auf die Figur 2 empfängt die Kommunikationsschnittstelle 20 den initialen Betriebsbefehl und die Vorhersagen von der Servervorrichtung 14 in einem Schritt S30. In einem Schritt S32 erkennt der Planer 22, dass der initiale Betriebsbefehl rechtzeitig empfangen wurde und leitet diesen zu einem gewünschten Zeitpunkt zu der Einrichtung 18. Die Einrichtung 18 wird entsprechend dem initialen Betriebsbefehl betrieben.

In einem Schritt S34 wird für einen ersten Zeitschritt t=1 ein erstes, jetzt aktuelles, Sensorsignal von der Einrichtung 16 erfasst. Im Schritt S36 kann die Kommunikationsschnittstelle 20 das erste Sensorsignal an die Kommunikationsschnittstelle 26 der Servervorrichtung 14 senden. Wie bereits entsprechend für das initiale Sensorsignal erläutert, kann die Servervorrichtung 14 das erste Sensorsignal empfangen und in Reaktion darauf einen ersten Betriebsbefehl und mehrere erste Vorhersagen übersenden.

In einem Schritt S38 wird geprüft, ob innerhalb einer vorbestimmten Zeitdauer der erste Betriebsbefehl (und die mehreren ersten Vorhersagen) von der Kommunikationsschnittstelle 20 bzw. dem Planer 22 empfangen wurde (+) oder nicht (-). Beispielsweise könnte der erste Betriebsbefehl aufgrund zu großer Latenzen zu spät empfangen werden oder aufgrund von Paketverlusten nur unvollständig empfangen werden.

Wird im Schritt S38 festgestellt, dass der erste Betriebsbefehl rechtzeitig empfangen wurde (+), leitet der Planer 22 diesen zu einem gewünschten Zeitpunkt zu der Einrichtung 18. Die Einrichtung 18 wird entsprechend dem ersten Betriebsbefehl im Schritt S40 betrieben. Das Verfahren kann weiter mit dem Schritt S34 mit einer Erfassung eines zweiten Sensorsignals für einen zweiten Zeitschritt (t=2) fortgesetzt werden. Sofern anschließend nicht rechtzeitig ein zweiter Betriebsbefehl für den zweiten Zeitschritt (t=2) von der Servervorrichtung 14 empfangen wird, kann entsprechend den nachfolgend beschriebenen Schritten S42ff vorgegangen werden, wobei nunmehr statt der initialen Vorhersagen die ersten Vorhersagen genutzt werden können.

Wird im Schritt S38 festgestellt, dass der erste Betriebsbefehl nicht innerhalb der vorbestimmten Zeitdauer empfangen wurde (-), leitet der Planer 22 die initialen Vorhersagen für den ersten Zeitschritt an den Hypothesenzuordner 24 im Schritt S42 weiter. Der Hypothesenzuordner 24 wählt im Schritt S42 diejenige initiale Vorhersage für den ersten Zeitschritt, deren Sensorsignalhypothese den geringsten Unterschied zu dem ersten Sensorsignal hat. Es ist auch möglich, dass inzwischen ein aktuelleres Sensorsignal vorliegt, mit dem der Vergleich zusätzlich oder alternativ durchgeführt werden kann. Im Schritt S44 wird die entsprechende Modellkorrektur an die Servervorrichtung 14 versendet. Im Schritt S46 wird die Betriebsbefehlhypothese der ausgewählten initialen Vorhersage für den ersten Zeitschritt an die Einrichtung 18 geleitet und die Einrichtung 18 entsprechend der Betriebsbefehlhypothese betrieben.

In einem Schritt S48 wird für den zweiten Zeitschritt t=2 ein zweites, jetzt aktuelles, Sensorsignal von der Einrichtung 16 erfasst. Im Schritt S50 kann die Kommunikationsschnittstelle 20 das zweite Sensorsignal an die Kommunikationsschnittstelle 26 der Servervorrichtung 14 senden. Wie bereits entsprechend für das initiale Sensorsignal erläutert, kann die Servervorrichtung 14 das zweite Sensorsignal empfangen und in Reaktion darauf einen zweiten Betriebsbefehl und mehrere zweite Vorhersagen übersenden.

In einem Schritt S52 wird geprüft, ob innerhalb einer vorbestimmten Zeitdauer der zweite Betriebsbefehl (und die mehreren zweiten Vorhersagen) von der Kommunikationsschnittstelle 20 bzw. dem Planer 22 empfangen wurde (+) oder nicht (-).

Wird im Schritt S52 festgestellt, dass der zweite Betriebsbefehl rechtzeitig empfangen wurde (+), leitet der Planer 22 diesen zu einem gewünschten Zeitpunkt zu der Einrichtung 18. Die Einrichtung 18 wird entsprechend dem zweiten Betriebsbefehl im Schritt S54 betrieben. Das Verfahren kann weiter mit dem Schritt S34 mit einer Erfassung eines dritten Sensorsignals für einen dritten Zeitschritt (t=3) fortgesetzt werden. Sofern anschließend nicht rechtzeitig ein dritter Betriebsbefehl für den dritten Zeitschritt von der Servervorrichtung 14 empfangen wird, kann entsprechend den beschriebenen Schritten S42ff vorgegangen werden, wobei nunmehr statt der initialen Vorhersagen die zweiten Vorhersagen genutzt werden können.

Wird im Schritt S52 festgestellt, dass der zweite Betriebsbefehl nicht innerhalb der vorbestimmten Zeitdauer empfangen wurde (-), leitet der Planer 22 die initialen Vorhersagen für den zweiten Zeitschritt an den Hypothesenzuordner 24 im Schritt S56 weiter. Der Hypothesenzuordner 24 wählt im Schritt S56 diejenige initiale Vorhersage für den zweiten Zeitschritt, deren Sensorsignalhypothese den geringsten Unterschied zu dem zweiten Sensorsignal (und/oder einem aktuelleren Sensorsignal) hat. Im Schritt S58 wird die entsprechende Modellkorrektur an die Servervorrichtung 14 versendet. Im Schritt S60 wird die Betriebsbefehlhypothese der ausgewählten initialen Vorhersage für den zweiten Zeitschritt an die Einrichtung 18 geleitet und die Einrichtung 18 entsprechend der Betriebsbefehlhypothese betrieben.

In einem Schritt S62 wird für einen dritten Zeitschritt t=3 ein drittes, jetzt aktuelles, Sensorsignal von der Einrichtung 16 erfasst. Im Schritt S64 kann die Kommunikationsschnittstelle 20 das dritte Sensorsignal an die Kommunikationsschnittstelle 26 der Servervorrichtung 14 senden. Wie bereits entsprechend für das initiale Sensorsignal erläutert, kann die Servervorrichtung 14 das dritte Sensorsignal empfangen und in Reaktion darauf einen dritten Betriebsbefehl und mehrere dritte Vorhersagen übersenden.

In einem Schritt S66 wird geprüft, ob innerhalb einer vorbestimmten Zeitdauer der dritte Betriebsbefehl (und die mehreren dritten Vorhersagen) von der Kommunikationsschnittstelle 20 bzw. dem Planer 22 empfangen wurde (+) oder nicht (-).

Wird im Schritt S66 festgestellt, dass der dritte Betriebsbefehl rechtzeitig empfangen wurde (+), leitet der Planer 22 diesen zu einem gewünschten Zeitpunkt zu der Einrichtung 18. Die Einrichtung 18 wird entsprechend dem dritten Betriebsbefehl im Schritt S68 betrieben. Das Verfahren kann weiter mit dem Schritt S34 mit einer Erfassung eines vierten Sensorsignals für einen vierten Zeitschritt (t=4) fortgesetzt werden. Sofern anschließend nicht rechtzeitig ein vierter Betriebsbefehl für den vierten Zeitschritt von der Servervorrichtung 14 empfangen wird, kann entsprechend den beschriebenen Schritten S42ff vorgegangen werden, wobei nunmehr statt der initialen Vorhersagen die dritten Vorhersagen genutzt werden können.

Wird im Schritt S66 festgestellt, dass der dritte Betriebsbefehl nicht innerhalb der vorbestimmten Zeitdauer empfangen wurde (-), leitet der Planer 22 die initialen Vorhersagen für den dritten Zeitschritt an den Hypothesenzuordner 24 im Schritt S70 weiter. Der Hypothesenzuordner 24 wählt im Schritt S770 diejenige initiale Vorhersage für den dritten Zeitschritt, deren Sensorsignalhypothese den geringsten Unterschied zu dem dritten Sensorsignal (oder einem aktuelleren Sensorsignal) hat. Im Schritt S72 wird die entsprechende Modellkorrektur an die Servervorrichtung 14 versendet. Im Schritt S74 wird die Betriebsbefehlhypothese der ausgewählten initialen Vorhersage für den dritten Zeitschritt an die Einrichtung 18 geleitet und die Einrichtung 18 entsprechend der Betriebsbefehlhypothese betrieben.

Das Verfahren kann entsprechend fortgesetzt werden, wobei Betriebsbefehlhypothesen nur solange ausgewählt werden können, wie die initialen Vorhersagen weitere Zeitschritte (t=4, t=5 usw.) aufweisen. Liegen keine Vorhersagen für einen entsprechenden Zeitschritt mehr vor, kann bspw. mit dem beschriebenen Notbetriebsbefehl gearbeitet werden.

Das Verfahren kann beispielsweise mit einer als fahrerloses Transportfahrzeug (FTF/AGV) ausgeführten Clientvorrichtung 12 ausgeführt werden. Die Einrichtung 16 des Transportfahrzeugs weist einen Laserscanner zum Erfassen der Umgebung auf. Alternativ oder zusätzlich kann die Einrichtung 16 beispielsweise eine Kamera und/oder ein Radar aufweisen. Die Einrichtung 18 des Transportfahrzeugs weist einen Lenkaktor und einen Antrieb (z. B. Verbrennungskraftmaschine oder Elektromotor) auf. Im Schritt S10 erfasst der Laserscanner eine Umgebung des Transportfahrzeugs als initiales Sensorsignal (z. B. als eine Punktwolke), das im Schritt S12 zu der Servervorrichtung 14 gesendet wird. Im Schritt S14 wird das initiale Sensorsignal des Laserscanners von der Servervorrichtung 14 empfangen. Im Schritt S16 wird ein Statusabbild des Transportfahrzeugs aktualisiert. Basierend auf einer Karte der Umgebung (Umgebungsmodell e) und dem initialen Sensorsignal kann beispielsweise eine Position des Transportfahrzeugs, eine Geschwindigkeit des Transportfahrzeugs, eine Bewegungsrichtung des Transportfahrzeugs und/oder Hindernisse im Weg des Transportfahrzeugs ermittelt werden. Diese Modellparameter werden zu der Betriebsbefehlersteller 38 und dem Hypothesenersteller 32 geleitet. Im Schritt S20 erstellt der Hypothesenersteller mehrere Systemzustandshypothesen für mögliche zukünftige Systemzustände für mehrere zukünftige Zeitschritte. Hierbei können bspw. gemäß dem Umgebungsmodell e bekannte Hindernisse, die in Bewegungsrichtung des Transportfahrzeugs liegen und/oder eine bekannte Navigationsroute des Transportfahrzeugs berücksichtigt werden. Aus den Systemzustandshypothesen können jeweils mindestens eine zugehörige Modellparameterhypothese abgeleitet werden (z. B. Position des Transportfahrzeugs, Geschwindigkeit des Transportfahrzeugs, Bewegungsrichtung des Transportfahrzeugs und/oder Hindernisse im Weg des Transportfahrzeugs). Im Schritt S22 werden aus den Modellparameterhypothesen mittels der Simulationsumgebung Sensorsignalhypothesen in Form von Punktwolken abgeleitet werden. Die Punktwolken können als synthetische Sensorsignale bereits einen hohen Realitätsgrad aufweisen, sodass keine Nachbearbeitung nötig ist. In den Schritten S18 und S26 werden die Betriebsbefehle für den Lenkaktor und den Antrieb des Transportfahrzeugs bezüglich des initialen Sensorsignals und der Modellparameter sowie die mehreren Betriebsbefehlhypothesen für den Lenkaktor und den Antrieb des Transportfahrzeugs bezüglich der mehreren Sensorsignalhypothesen und Modellparameterhypothesen erstellt. Die Informationen werden im Schritt S28 bspw. gemeinsam an das Transportfahrzeug versendet. Das Transportfahrzeug empfängt die Informationen im Schritt S30. Im Schritt S32 werden der Lenkaktor und der Antrieb des Transportfahrzeuges entsprechend den empfangenen Betriebsbefehlen betrieben. Im Schritt S34 erfasst der Laserscanner die Umgebung erneut. Das Sensorsignal wird im Schritt S36 an die Servervorrichtung gesendet. Wenn für den nächsten Zeitschritt nicht rechtzeitig im Schritt S38 Betriebsbefehle für den Lenkaktor und den Antrieb von dem Transportfahrzeug empfangen werden, kann dieses auf die bereits empfangenen Vorhersagen zurückgreifen.

Das Verfahren kann beispielsweise auch bei Nutzerinteraktionsprozessen vorzugsweise im Rahmen von Cloud-Computing, z. B. Cloud-Gaming, angewendet werden. Beispielsweise kann die Clientvorrichtung ein Endgerät, wie z. B. ein PC, eine Konsole, ein Tablet usw. sein. Die Einrichtung 16 kann eine Benutzereingabeeinrichtung aufweisen, z. B. Knöpfe oder eine berührungsempfindliche Anzeige. Die Einrichtung 18 kann eine Anzeige aufweisen. Die Sensorsignale sind durch Benutzereingaben mittels der Einrichtung 16 bewirkt werden. In den Vorhersagen können Eingaben des Benutzers antizipiert bzw. vorhergesagt werden (=Sensorsignalhypothesen). Die Betriebsbefehle und Betriebsbefehlhypothesen können Bilddaten zum Anzeigen auf der Anzeige der Einrichtung 18 und/oder Audiodaten zum Ausgeben mittels eines Lautsprechers der Einrichtung 18 aufweisen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere sind die Merkmale der unabhängigen Ansprüche unabhängig voneinander offenbart. Zusätzlich sind auch die Merkmale der Unteransprüche unabhängig von sämtlichen Merkmalen der unabhängigen Ansprüche und beispielsweise unabhängig von den Merkmalen bezüglich des Vorhandenseins und/oder der Konfiguration der einzelnen Verfahrensschritte der unabhängigen Ansprüche offenbart.

### Bezugszeichenliste

- 10: Netzwerksystem
- 12: Clientvorrichtung
- 14: Servervorrichtung
- 16: Einrichtung zur Erfassung eines Sensorsignals
- 18: Einrichtung zum Ausführen eines Betriebsbefehls
- 20: Kommunikationsschnittstelle
- 22: Planer
- 24: Hypothesenzuordner
- 26: Kommunikationsschnittstelle
- 28: Statusmodellierer
- 30: Umgebungsmodellierer
- 32: Hypothesenersteller
- 34: Simulationsumgebung
- 36: Nachbearbeiter
- 38: Betriebsbefehlersteller
- S10-S74: Verfahrensschritte
- b_t: Betriebsbefehl(e) für Zeitschritt t
- bh_t: Betriebsbefehlhypothese(n) für Zeitschritt t
- bh_t+x: Betriebsbefehlhypothese(n) für Zeitschritt t+x
- e: Umgebungsmodell
- m_t: Modellparameter für Zeitschritt t
- mh_t+x: Modellparameterhypothese(n) für Zeitschritt t+x
- r: Modellkorrektur
- s_t: Sensorsignal(e) für Zeitschritt t
- sh_t: Sensorsignalhypothese(n) für Zeitschritt t
- sh_t+x: Sensorsignalhypothese(n) für Zeitschritt t+x

## Patentansprüche

1. Verfahren zum Betreiben einer Clientvorrichtung (12), vorzugsweise eines Roboters, eines Fahrzeugs oder eines Endgeräts, zur Latenzkompensation, aufweisend:
Empfangen mehrerer Vorhersagen, die jeweils mindestens eine Sensorsignalhypothese und mindestens eine Betriebsbefehlhypothese aufweisen, von einer Servervorrichtung (14);
Erfassen mindestens eines ersten Sensorsignals;
Senden des mindestens einen ersten Sensorsignals zu der Servervorrichtung (14);
Abwarten einer vorbestimmten Zeitdauer, wobei:
- wenn innerhalb der vorbestimmten Zeitdauer mindestens ein erster Betriebsbefehl von der Servervorrichtung (14) in Reaktion auf das Senden des mindestens einen ersten Sensorsignals empfangen wird, Betreiben der Clientvorrichtung (12) mit dem mindestens einen ersten Betriebsbefehl; und
- wenn innerhalb der vorbestimmten Zeitdauer kein erster Betriebsbefehl von der Servervorrichtung (14) in Reaktion auf das Senden des mindestens einen ersten Sensorsignals empfangen wird:
- Auswählen einer der mehreren Vorhersagen in Abhängigkeit von dem mindestens einen ersten Sensorsignal und/oder mindestens einem aktuell erfassten Sensorsignal und den mehreren Sensorsignalhypothesen; und
- Betreiben der Clientvorrichtung (12) mit der mindestens einen Betriebsbefehlhypothese der ausgewählten Vorhersage.

2. Verfahren nach Anspruch 1, ferner aufweisend:
Erfassen mindestens eines initialen Sensorsignals vor dem Erfassen des mindestens einen ersten Sensorsignals, vorzugsweise mindestens einen Zeitschritt oder Betriebstakt vor dem Erfassen des mindestens einen ersten Sensorsignals;
Senden des mindestens einen initialen Sensorsignals an die Servervorrichtung (14), wobei das Empfangen der mehreren Vorhersagen in Reaktion auf das Senden des mindestens einen initialen Sensorsignals erfolgt.

3. Verfahren nach Anspruch 2, ferner aufweisend:
Empfangen mindestens eines initialen Betriebsbefehls von der Servervorrichtung (14) in Reaktion auf das Senden des mindestens einen initialen Sensorsignals, vorzugsweise zusammen mit dem Empfangen der mehreren Vorhersagen; und
Betreiben der Clientvorrichtung (12) mit dem mindestens einen initialen Betriebsbefehl, vorzugsweise während der vorbestimmten Zeitdauer, bis zum nächsten Betriebstakt, bis zum Betreiben der Clientvorrichtung (12) mit dem mindestens einen ersten Betriebsbefehl oder bis zum Betreiben der Clientvorrichtung (12) mit der mindestens einen Betriebsbefehlhypothese der ausgewählten Vorhersage.

4. Verfahren nach einem der vorherigen Ansprüche, wobei:
diejenige Vorhersage ausgewählt wird, deren mindestens eine Sensorsignalhypothese:
- mit dem mindestens einen ersten Sensorsignal übereinstimmt; oder
- sich am wenigstens von dem mindestens einen ersten Sensorsignal unterscheidet.

5. Verfahren nach einem der vorherigen Ansprüche, ferner aufweisend:
Senden einer Modellkorrektur basierend auf der mindestens einen Betriebsbefehlhypothese der ausgewählten Vorhersage zu der Servervorrichtung (14).

6. Verfahren nach einem der vorherigen Ansprüche, ferner aufweisend:
Empfangen mehrerer weiterer Vorhersagen, die jeweils mindestens eine Sensorsignalhypothese und mindestens eine Betriebsbefehlhypothese aufweisen, von der Servervorrichtung (14), vorzugsweise in Reaktion auf das Senden des mindestens einen initialen Sensorsignals und/oder zusammen mit dem Empfangen der mehrerer Vorhersagen;
Erfassen mindestens eines zweiten Sensorsignals nach dem Erfassen des mindestens einen ersten Sensorsignals, vorzugsweise einen Betriebstakt nach dem Erfassen des mindestens einen ersten Sensorsignals;
Senden des mindestens einen zweiten Sensorsignals zu der Servervorrichtung (14);
Abwarten einer weiteren vorbestimmten Zeitdauer, wobei:
- wenn innerhalb der weiteren vorbestimmten Zeitdauer mindestens ein zweiter Betriebsbefehl von der Servervorrichtung (14) in Reaktion auf das Senden des mindestens einen zweiten Sensorsignals empfangen wird, Betreiben der Clientvorrichtung (12) mit dem mindestens einen zweiten Betriebsbefehl; und
- wenn innerhalb der weiteren vorbestimmten Zeitdauer kein zweiter Betriebsbefehl von der Servervorrichtung (14) in Reaktion auf das Senden des mindestens einen zweiten Sensorsignals empfangen wird:
- Auswählen einer der mehreren weiteren Vorhersagen in Abhängigkeit vom dem mindestens einen zweiten Sensorsignal und/oder mindestens einem aktuell erfassten Sensorsignal und den mehreren Sensorsignalhypothesen der mehreren weiteren Vorhersagen; und
- Betreiben der Clientvorrichtung (12) mit der mindestens einen Betriebsbefehlhypothese der ausgewählten Vorhersage der mehreren weiteren Vorhersagen; und optional
- Senden einer weiteren Modellkorrektur basierend auf der mindestens einen Betriebsbefehlhypothese der ausgewählten Vorhersage der mehreren weiteren Vorhersagen zu der Servervorrichtung (14).

7. Verfahren nach einem der vorherigen Ansprüche, wobei:
das mindestens eine erste Sensorsignal von einer internen Sensorik, einer Umgebungserfassungssensorik und/oder einer Benutzereingabeeinrichtung der Clientvorrichtung (12) erfasst wird; und/oder
mindestens ein Aktor und/oder eine Benutzerausgabeeinrichtung der Clientvorrichtung (12) mittels des mindestens einen ersten Betriebsbefehls betrieben wird.

8. Verfahren zum Betreiben einer Servervorrichtung (14) zur Latenzkompensation, aufweisend:
Erstellen mehrerer Systemzustandshypothesen bezüglich prädiktiver Systemzustände einer Clientvorrichtung (12) basierend auf einem, vorzugsweise aktuellen, Statusabbild der Clientvorrichtung (12) und vorzugsweise einem Umgebungsmodell der Clientvorrichtung (12);
Erstellen mehrerer Vorhersagen, die jeweils mindestens eine Sensorsignalhypothese und mindestens eine Betriebsbefehlhypothese aufweisen, basierend auf den mehreren Systemzustandshypothesen; und
Senden der mehreren Vorhersagen an die Clientvorrichtung (12).

9. Verfahren nach Anspruch 8, ferner aufweisend
Empfangen mindestens eines initialen Sensorsignals von der Clientvorrichtung (12),
wobei das Erstellen des Statusabbilds und/oder der mehreren Systemzustandshypothesen zusätzlich auf dem mindestens einen initialen Sensorsignal basiert.

10. Verfahren nach Anspruch 9, ferner aufweisend:
Erstellen mindestens eines initialen Betriebsbefehls basierend auf dem Statusabbild und/oder dem mindestens einen initialen Sensorsignal; und
Senden des mindestens einen initialen Betriebsbefehls zu der Clientvorrichtung (12), vorzugsweise zusammen mit den mehreren Vorhersagen.

11. Verfahren nach einem der Ansprüche 8 bis 10, wobei:
die Sensorsignalhypothesen aus den mehrerer Systemzustandshypothesen und vorzugsweise einem Umgebungsmodell der Clientvorrichtung (12) abgeleitet werden; und/oder
die Sensorsignalhypothesen mittels einer, vorzugsweise grafischen, Simulationsumgebung (34) der Servervorrichtung (14) aus den mehreren Systemzustandshypothesen abgeleitet werden;
die Sensorsignalhypothesen durch Hinzufügen einer Störgröße, vorzugsweise Rauschen, durch Rendern und/oder mittels maschinellen Lernens, vorzugsweise durch Generative-Adversarial-Netzwerke, angepasst oder anpassbar sind; und/oder
die Betriebsbefehlhypothesen basierend auf den Systemzustandshypothesen und den Sensorsignalhypothesen erstellt werden.

12. Verfahren nach einem der Ansprüche 8 bis 11, wobei:
die mehrerer Systemzustandshypothesen, Betriebsbefehlhypothesen und/oder Sensorsignalhypothesen parallel erstellt werden.

13. Verfahren nach einem der Ansprüche 8 bis 12, ferner aufweisend:
Erstellen mehrerer weiterer Systemzustandshypothesen bezüglich prädiktiver Systemzustände der Clientvorrichtung (12), die weiter in der Zukunft liegen als die Systemzustandshypothesen, basierend auf dem Statusabbild der Clientvorrichtung (12), den Systemzustandshypothesen und vorzugsweise einem Umgebungsmodell der Clientvorrichtung (12);
Erstellen mehrerer weiterer Vorhersagen, die jeweils mindestens eine Sensorsignalhypothese und mindestens eine Betriebsbefehlhypothese aufweisen, basierend auf den mehreren weiteren Systemzustandshypothesen; und
Senden der mehreren weiteren Vorhersagen an die Clientvorrichtung (12), vorzugsweise zusammen mit den mehreren Vorhersagen.

14. Verfahren nach einem der vorherigen Ansprüche, wobei:
das Verfahren zyklisch wiederholt wird, vorzugsweise gemäß einem Betriebstakt der Clientvorrichtung (12).

15. Vorrichtung, vorzugsweise Clientvorrichtung (12) oder Servervorrichtung (14), die dazu konfiguriert ist, ein Verfahren nach einem der vorherigen Ansprüche auszuführen.
